# EUROPEAN PATENT SPECIFICATION

(11) **EP 2 999 880 B1**
(45) Date of publication and mention of the grant of the patent: **11.07.2018**
(21) Application number: 14800479.9
(22) Date of filing: 22.05.2014
(51) Int. Cl.: F03D 3/06, F03D 9/25, H02K 21/26, F03D 15/20

(54) **WINDMILL GENERATOR**
WINDMÜHLENGENERATOR
GÉNÉRATRICE D'ÉOLIENNE

(30) Priority: 23.05.2013 US 201313900851
(43) Date of publication of application: 30.03.2016
(73) Proprietor: Nuspecies Global Machines Corporation, Stormville, NY 12582 (US)
(72) Inventor: FARQUHARSON, Aston, Gustavous, Stormville, NY 12582 (US); MOUSAA, Victor, Roland Vargas, Beacon, NY 12508 (US)
(74) Representative: Barker Brettell LLP
(86) International application number: PCT/US2014/039106
(87) International publication number: WO 2014/190135

(56) References cited:
- WO-A2-2010/135484
- US-A1- 2007 040 385
- US-A1- 2010 102 570
- US-A1- 2010 213 723
- US-B1- 6 249 058
- US-B1- 6 756 719

## Description

### FIELD OF THE INVENTION

The present invention relates to a method and apparatus for generating electricity generally from wind energy, but more particularly to a method and apparatus for generating electricity either or both of natural and artificial sources of wind or air energy.

### BACKGROUND OF THE INVENTION

Windmills are powered by their sails from the turbulence of atmospheric winds. Sails are found in different designs from primitive common sails to advanced patent sails. Meanwhile, alternative forms of generating electricity are important for many known reasons. Many windmills now continue to prove costly due to, for example, complex manufacturing methods and the weight of the materials. As such, there is a need for a cost-effective method and apparatus that can harness the atmospheric pressure from wind turbulence at a reasonable price to produce an electrical field for the public. Alternatively, and more particularly, there is a need for a cost-effective method and apparatus to generate electricity using natural or artificial wind and/or air energy. An electricity generator is known from WO 2011044144 A1.

### SUMMARY OF THE INVENTION

According to the invention there is provided an electricity generator as defined in claim 1. In some embodiments, like the inside of a Shurite amp meter, a stationary magnet with its magnetic force is positioned within (i.e. substantially in the middle) of a framed loop/solenoid coil(s) which is placed on a pinpoint needle(s) (or a device or rod that has sharp end points at one or both ends like a needle - for example a nail or a screw); wherein a magnet may balance the loop/solenoid coil. A set of wings, vanes, blades, or a wind turbine (a wind turbine vent) are coupled to a frame about which the loop/solenoid coil(s) is wrapped. When motion is induced to the coil(s) from the "pushing" effect of moving wind or air (from a natural and/or artificial source) striking the set of wings, this ultimately causes the production of an electric field and electric current due to flux lines of the magnetic field of the magnet(s) being crossed by the moving coil(s).

The electricity generator may comprise a turbine blade assembly; a coil frame armature rotatably supported by two needles and mechanically coupled to the turbine blade assembly; and a magnet disposed in proximity to the coil frame armature; wherein in response to flux lines of a magnetic field of the at least one magnet being crossed by the coil, electricity is generated.

The electricity generator may further comprise a coil frame armature disposed to rotate within an outer frame; a set of wings attached to the coil frame armature; a first neodymium magnet disposed within the coil frame armature; a second neodymium magnet disposed above the outer frame; a positive wire connected from a first end of the coil frame armature to a first pinpoint needle engaged with the outer frame; and a negative wire connected from a second end of the coil frame armature to a second pinpoint needle engaged with the outer frame.

### BRIEF DESCRIPTION OF THE DRAWINGS

These and other features of this invention will be more readily understood from the following detailed description of the various aspects of the invention taken in conjunction with the accompanying drawings in which:
FIG. 1 is a side view of an embodiment of the present invention utilizing three center-mounted magnets.
FIG. 2 is a top-down view of an embodiment of the present invention.
FIG. 3 is a side view of an alternative embodiment of the present invention utilizing two center-mounted magnets.
FIG. 4 is a side cutaway view of another alternative embodiment of the present invention utilizing a wind turbine.

The drawings are not necessarily to scale. The drawings are merely schematic representations, not intended to portray specific parameters of the invention. In the drawings, like numbering represents like elements.

### DETAILED DESCRIPTION OF THE INVENTION

Illustrative embodiments will now be described more fully herein with reference to the accompanying drawings, in which embodiments are shown. This disclosure may, however, be embodied in many different forms and should not be construed as limited to the embodiments set forth herein. Rather, these embodiments are provided so that this disclosure will be thorough and complete and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. When a word ends with "(s)", it will be understood that the item referred to by the term may include the singular item or a plurality of such item, i.e. it means "at least one" of the item. Furthermore, the use of the terms "a", "an", etc., do not denote a limitation of quantity, but rather denote the presence of at least one of the referenced items. The term "set" is intended to mean a quantity of at least one. It will be further understood that the terms "comprises" and/or "comprising", or "includes" and/or "including", when used in this specification, specify the presence of stated features, regions, integers, steps, operations, elements, and/or components, but do not preclude the presence or addition of one or more other features, regions, integers, steps, operations, elements, components, and/or groups thereof.

Reference throughout this specification to "one embodiment," "an embodiment," "embodiments," "exemplary embodiments," "some embodiments", or similar language, means that a particular feature, structure, or characteristic described in connection with the embodiment is included in at least one embodiment of the present invention. Thus, appearances of the phrases "in one embodiment," "in an embodiment," "in embodiments", "in some embodiments", and similar language throughout this specification may, but do not necessarily, all refer to the same embodiment.

Embodiments of the present invention provide a method and apparatus for generating electricity by coil(s) or at least one magnet in motion. The at least one magnet may be any suitable size or shape. Moving air pushes a set of wings, blades, or vanes (each hereinafter referred to as "a set of wing" or "wings", for simplicity), or a turbine. The moving air may originate from any natural or artificial source, such as, without limitation, natural wind, a fan, or even a person blowing. The set of wings may be coupled to a coil frame armature, causing the coil(s) to cross flux lines of a magnetic field created by the magnet(s) when moving air pushes the set of wings. The set of wings can be comprised of aluminum, plastic, metal, or cardboard in a variety of shapes. The coil frame armature may be comprised of plastic, ceramic, or another suitable material.

Embodiments of the present invention provide a method and apparatus for creating electricity on a tangible scale. In some embodiments, like inside a Shurite amp meter, a magnet with its magnetic force is positioned substantially in the middle of a rectangular loop/solenoid coil ("coil(s) 118") wrapped around an inner frame referred to as coil frame armature, which is disposed on a magnetized (non-magnetized) pinpoint needle(s) (also referred to herein for simplicity as "needle(s)") of the magnet to balance the coil frame armature. Another magnet(s) can be placed above or below or beside the coil in close proximity to create electricity. Pinpoint needs may be comprises of a conductive metal such as copper and/or aluminum, etc.

In some non-claimed embodiments, only a magnet above or below or beside the coil wrapped around the coil frame armature is used, i.e., no magnet is placed within the coil frame armature. A set of wing(s) are coupled to the coil frame armature, typically, but not limited to at the interfaces of sides of the coil frame armature. When moving air "pushes" into the wings, the coil frame armature holding the coil is caused to rotate at a constant 360 degrees through flux lines of the magnet(s), where ultimately electric currents will be produced. When magnetic flux lines are crossed by the loop/solenoid coil in motion due to a source of energy, an electric current is produced.

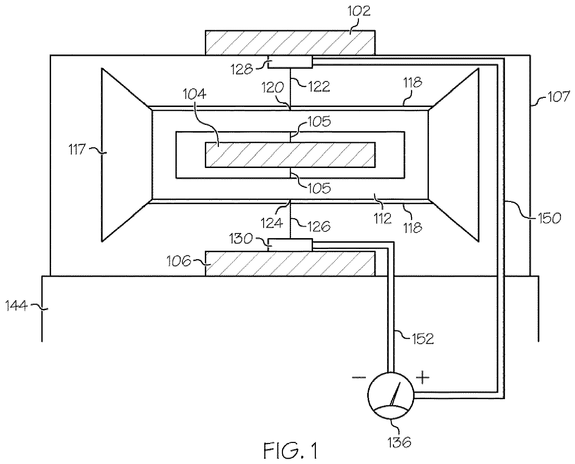

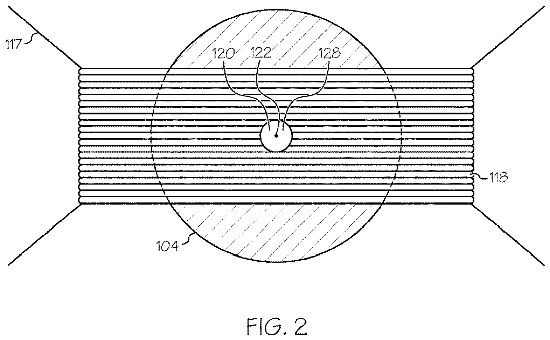

Referring now to Figs. 1 and 2, there is a first magnet 104, a second (middle) magnet 102 above the first magnet 104, and a third magnet 106 below the first magnet 104. The magnets are in proximity to a coil(s) 118 wound around a coil frame armature 112 such that magnetic fields from the magnets 102, 104, and 106 are incident upon the coil(s) 118. In some embodiments, at least one of the first magnet 104, second magnet 102, and third magnet 106 is a rare earth magnet. In embodiments, the rare earth magnets may include neodymium magnets, and/or samarium-cobalt magnets. As an alternative to a single magnet, an array of magnets may be used at each position (where each of first magnet 104, second magnet 102, and third magnet 106 are shown). For example, magnet 102 may be replaced by multiple smaller magnets. Magnet(s) 102 is positioned above the second magnet(s) 104. The magnetic field of the top magnet(s) 102 holds stationary the middle magnet 104(s) in place with the help of the needles 105, 122, and 126 attached to magnet(s) 104 and suspended or "floating" between surface areas of metal plates 128 and 130. Metal plates 128 and 130 are formed of a conductive metal such as copper, gold, silver, aluminum, and/or tungsten, etc. Coil(s) is in electrical contact with metal plates 126 and 130 by way of needles 122 and 126 respectively, to deliver electricity to the meter 136. The top magnet 102 is situated on a holding device on the outer frame 107 of the apparatus and magnet(s) 102 is stationary. It will be recognized that the magnet(s) 102 can be situated atop any suitable apparatus that holds it in place. The outer frame 107 houses the coil frame armature 112, which is discussed further herein. The second magnet(s) 104 can be of any shape on the horizontal axis. With the help of needles (105, 122, and 126), magnet(s) 102 (above) and magnet(s) 104 (middle) are kept at a predetermined distance from each other. The distance is based on the size of the magnets and or the distance to which the flux lines of the magnetic field extend.

In embodiments, magnet(s) 104 becomes suspended by a magnetized needle when spaced at an appropriate distance from magnet(s) 102. In some embodiments, the magnet(s) 102 and magnet(s) 104 are the same size and have the same Surface Gauss, and in other embodiments, the magnet(s) 102 and magnet(s) 104 can be different sizes with different Surface Gausses from one another. In this embodiment, the coil frame armature 112 holding coil(s) 118 is rotated by motion of the attached wing(s) 117 by natural wind or wind or air from artificial source (source of energy) while magnet(s) 104 and/or 102 are stationary, creating electricity from coil(s) 118 crossing the flux lines of magnets 104 and/or 102.

Magnetized needle keeps the magnet(s) 104 (middle) suspended due to the attractional field of magnet(s) 102, so that the coil(s) 118 is kept lighter than its natural weight wherein for example a 20-pound coil or magnet could weigh mere ounces while suspended in this embodiment. This magnetic field also keeps magnet 104 (below) stationary.

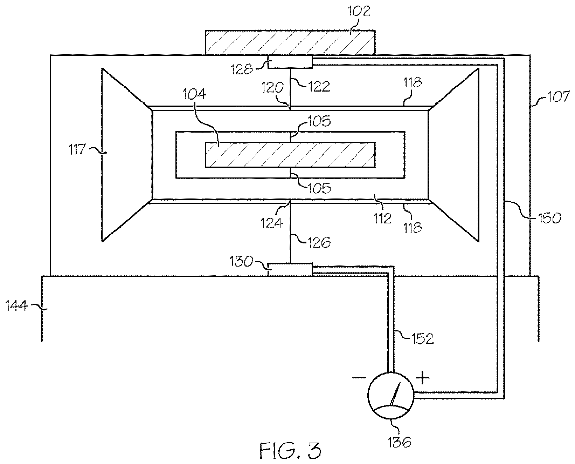

In a related embodiment (referring now to FIG. 3), magnet(s) 106 is not present. However, magnet(s) 104 and magnet 102 are present and attached to pinpoint needle(s) 105 122, and 126 are held lightly in place by metal plates (or other metal hard surfaces) 128 and 130 respectively wherein wires are attached 128 and 130 with the wires positive 150 and negative 152 to meter 136 for the electric circuit.

In all the foregoing embodiments in these aspects of the invention once any Source of Energy pushes the wing(s) 117, the coil(s) 118 rotates a 360 degree turn because of the considerable weightlessness achieved and the reduced friction. Weightlessness and reduced friction exist because of the suspending (i.e. "floating") aspects of the invention. The sharp needle points 105, 122 and 126 allow such movement. Once in motion, the magnet(s) or coil(s) will continue to turn on its own in the 360 degree motion for a considerable time period (angular momentum) without any Source of Energy pushing the wing, the wings or wind turbines.

In some embodiments, a first end 120 of coil wire 118 (the coil may also be referred to herein as "loop") engages with needle 122 and a second end 124 of coil wire 118 engages with a needle 126. Needles 122 and 126 engage with indentations of a first metal plate 128 and second metal plate 130, respectively. The coil winding is in electrical contact with plates 126 and 130 by way of needles 122 and 126 respectively, to deliver electricity to the meter 136. The first plate 128 is situated over the top of coil frame armature 112, and second plate 130 is situated under the bottom of coil frame armature 112. In embodiments, the first plate 128 and second plate 130 are each formed of a conductive metal, such as copper. This in turn will balance and rotate the wing(s) 117 attached to the coil frame armature 112 wherein moving air, such as natural wind and or an artificial air source causes the coil frame armature 112 to turn the coil(s) 118 throughout the flux lines of the stationary magnet or magnets 102, 104, 106, creating electricity.

The winding copper coil 118, is attached to the coil frame armature 112, which will be connected to right side up and upside down using pinpoint needles 122 and 126 and/or other metal objects acting as needles. Such needles rotate and also make electrical contact with both the positive wire 150 and negative wire 152 causing the electron flow to create an electric current. It should be noted that there is little resistance from frictional force, except from the rare earth magnets 102, 104 which is stationary above and below the point of the stationary magnetic needle(s) 105 on the base 144. The first and second wires attach to meter 136 to indicate, for example, the amount of electricity being generated.

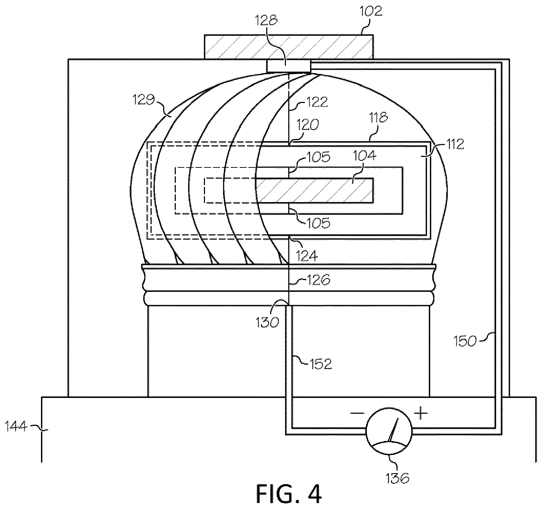

In some embodiments, a set of wings 117 are coupled to the coil frame armature 112 (e.g. at the interfaces of its sides). Other embodiments may utilize wing shapes other than that shown, such as curved surfaces, etc. In some embodiments, the set of wings may comprise more or fewer than the four wings as shown. In some embodiments, the set of wings could include a shape of turbines (see FIG. 4), used as vents, attached to the needle(s) 105, 122 and 126.

The present invention also comprises a receiving device. In the example embodiment chosen for the purpose of disclosure, the receiving device is a micro /milliamp meter (also referred to herein as "scale") 136. The scale 136 serves as an indication that an electric current is generated through embodiments of the present invention. The scale 136 may also be referred to or regarded herein as a receiving device that ultimately makes use of the electric current generated.

The set of wings 117 are formed such that they are capable of revolving seamlessly via their connection to the coil frame armature 112, which is balanced on the magnetic needle 105, 122 and 126. When moving air hits wings 117, the wings are pushed, causing the coil frame armature 112 to spin on the needle 105, 122 and 126. At the same time, magnetic lines of force are formed as the magnets 102 and 104 remain stationary.

An embodiment of the present invention comprises coil(s) 118 which, for example, comprise copper. Coil(s) 118 may comprise other metals, such as gold, silver, tungsten, etc. Copper wire is a good conductor of electricity when in motion rotating around a magnet. According to Faraday's law, electricity is produced whenever magnetic lines of force between stationary magnets 102, 104 cuts across the coil(s) 118, which is part of a complete circuit. This may occur when the coil(s) 118 is in motion (due to wings 117 attached at coil frame armature 112). The coil(s) 118 in the embodiments are formed by winding a wire (e.g., made of copper) in the shape of a spiral around coil frame armature 112. The coil(s) 118 in fact act like a magnet when the current is turned on. What happens is that the copper coil 118 possesses similar magnetic lines of force around it as an ordinary magnet does. As mentioned above, whenever magnetic lines cut across the coil(s) 118 in a full circuit based on the revolutions per minute, an electric current is generated within the axle or coil spring of the scale 136 or other receiving device.

Referring now to FIG. 4, a side cutaway view of another alternative embodiment of the present invention utilizing a wind turbine is shown. Turbine assembly 129 is mounted on base 144 and mechanically coupled to coil 118, such that it spins relative to magnets 102 and 104. During operation, the turbine spins (e.g. due to wind) and as a result, electricity is delivered with the wires positive 150 and negative 152 to meter 136 for the electric circuit. Non-claimed embodiments of the present invention also provide a method of generating electricity, the steps comprising: exposing a windmill generator to a wind source, the wind generator comprising: at least one magnet disposed within a coil frame armature attached to at least one needle, the coil frame armature comprising an inner frame around which a coil is wrapped; wherein in response to moving wind or air striking a set of wings attached to the at least one magnet, the flux lines of the magnetic field of the at least one magnet are crossed by the coil(s). This causes the coil to be exposed to a varying magnetic field, which, in accordance with Faraday's law of induction, generates electricity.

The foregoing description of various aspects of the invention has been presented for purposes of illustration and description.

## Claims

1. An electricity generator, comprising:
a first magnet (104) and a second magnet (102),
wherein the first magnet is substantially stationary and centrally disposed within a coil frame armature (112), the coil frame armature being configured to rotate and comprising a frame around which a coil (118) is wrapped,
wherein the second magnet is stationary, outside the coil frame armature,
wherein a pinpoint needle (105) is embedded within the first magnet, the needle balancing the first magnet within the coil frame armature,
wherein the first magnet is held stationary in place by the magnetic field of the second magnet and by the pinpoint needle whereby the first magnet is held stationary when the coil frame armature rotates during generation of electricity,
wherein the electricity generator is configured to generate electricity in response to the coil crossing flux lines of a magnetic field of at least the first magnet.

2. The electricity generator of claim 1, wherein the flux lines are crossed by rotation of the coil (118).

3. The electricity generator of claim 2, wherein the coil frame armature (112) comprises a set of wings (117) attached to the frame, and rotation of the coil is in response to moving air striking the set of wings.

4. The electricity generator of claim 1, wherein at least one of the magnets (102; 104) is a rare earth magnet.

5. The electricity generator of claim 1, further comprising a holding device on which the second magnet (102) of the two magnets is situated.

6. The electricity generator of claim 1, the armature (112) further comprising a first metal plate (128) at a top of the coil frame armature and a second metal plate (130) at a bottom of the coil frame armature (112).

7. The electricity generator of claim 1, further comprising a first needle (122) connecting a first end of the coil to a metal plate (128), and a second needle (126) attaching a second end of the coil to a second metal plate (130).

8. The electricity generator of claim 1, further comprising a meter (136).

9. The electricity generator of claim 8, further comprising a positive wire (150) attaching a first metal plate (128) to the meter, and a negative wire (152) attaching a second metal plate (130) to the meter (136).

10. The electricity generator of claim 1, further comprising:
a turbine blade assembly;
wherein the coil frame armature (112) is rotatably supported by two needles (122; 126) and mechanically coupled to the turbine blade assembly; and
the first magnet (104) disposed in proximity to the coil frame armature; wherein in response to flux lines of a magnetic field of the first magnet (104) being crossed by the coil (118), electricity is generated.

11. The electricity generator of claim 10, wherein the two needles (122; 126) are nonmagnetic.

12. The electricity generator of claim 11, wherein the two needles (122; 126) are comprised of a material selected from the group consisting of: plastic, aluminium, and ceramic.

13. The electricity generator of claim 10, wherein the first magnet (104) comprises a rare earth magnet.

14. The electricity generator of claim 10, wherein the first magnet (104) comprises a neodymium magnet, or a samarium-cobalt magnet.

15. The electricity generator of claim 1, further comprising:
the coil frame armature disposed to rotate within an outer frame (107);
a set of wings (117) attached to the coil frame armature;
the first magnet (104) comprising first neodymium magnet disposed within the coil frame armature (112);
the second magnet (102) comprising a second neodymium magnet disposed above the outer frame;
a positive wire (150) connected from a first end of the coil frame armature to a first pinpoint needle (122) engaged with the outer frame; and
a negative wire (152) connected from a second end of the coil frame armature to a second pinpoint needle (126) engaged with the outer frame.

## Patentansprüche

1. Elektrizitätsgenerator, umfassend:
einen ersten Magneten (104) und einen zweiten Magneten (102),
wobei der erste Magnet im Wesentlichen stationär ist und zentral innerhalb einer Spulenrahmenarmatur (112) angeordnet ist, wobei die Spulenrahmenarmatur ausgelegt ist, sich zu drehen, und einen Rahmen umfasst, um den eine Spule (118) gewickelt ist,
wobei der zweite Magnet stationär ist, außerhalb der Spulenrahmenarmatur,
wobei eine Nadelspitze (105) innerhalb des ersten Magneten eingebettet ist, wobei die Nadel den ersten Magneten innerhalb der Spulenrahmenarmatur im Gleichgewicht hält,
wobei der erste Magnet stationär von dem Magnetfeld des zweiten Magneten und von der Nadelspitze festgehalten wird, wodurch der erste Magnet stationär gehalten wird, wenn sich die Spulenrahmenarmatur während der Erzeugung von Elektrizität dreht,
wobei der Elektrizitätsgenerator ausgelegt ist, Elektrizität ansprechend darauf zu erzeugen, das die Spule Flusslinien eines Magnetfelds mindestens des ersten Magneten kreuzt.

2. Elektrizitätsgenerator nach Anspruch 1,
wobei die Flusslinien durch die Drehung der Spule (118) gekreuzt werden.

3. Elektrizitätsgenerator nach Anspruch 2,
wobei die Spulenrahmenarmatur (112) einen Satz von Flügeln (117) umfasst, die an dem Rahmen angebracht sind, und die Drehung der Spule ansprechend darauf erfolgt, dass sich bewegende Luft auf den Satz von Flügeln auftrifft.

4. Elektrizitätsgenerator nach Anspruch 1,
wobei mindestens einer der Magneten (102; 104) ein Seltenerdmagnet ist.

5. Elektrizitätsgenerator nach Anspruch 1,
ferner umfassend eine Haltevorrichtung, auf welcher der zweite Magnet (102) der beiden Magneten angeordnet ist.

6. Elektrizitätsgenerator nach Anspruch 1,
wobei die Armatur (112) ferner eine erste Metallplatte (128) oben auf der Spulenrahmenarmatur und eine zweite Metallplatte (130) an einem Boden der Spulenrahmenarmatur (112) umfasst.

7. Elektrizitätsgenerator nach Anspruch 1,
ferner umfassend eine erste Nadel (122), die ein erstes Ende der Spule mit einer Metallplatte (128) verbindet, und eine zweite Nadel (126), die ein zweites Ende der Spule an einer zweiten Metallplatte (130) anbringt.

8. Elektrizitätsgenerator nach Anspruch 1,
ferner umfassend einen Messer (136).

9. Elektrizitätsgenerator nach Anspruch 8,
ferner umfassend einen positiven Draht (150), der eine erste Metallplatte (128) an dem Messer anbringt, und einen negativen Draht (152), der eine zweite Metallplatte (130) an dem Messer (136) anbringt.

10. Elektrizitätsgenerator nach Anspruch 1,
ferner umfassend:
eine Turbinenschaufelanordnung;
wobei die Spulenrahmenarmatur (112) drehbar von zwei Nadeln (122; 126) gelagert wird und mechanisch mit der Turbinenschaufelanordnung gekuppelt ist; und
den ersten Magneten (104), der in der Nähe der Spulenrahmenarmatur angeordnet ist;
wobei ansprechend darauf, dass Flusslinien eines Magnetfelds des ersten Magneten (104) von der Spule (118) gekreuzt werden, Elektrizität erzeugt wird.

11. Elektrizitätsgenerator nach Anspruch 10,
wobei die beiden Nadeln (122; 126) nichtmagnetisch sind.

12. Elektrizitätsgenerator nach Anspruch 11,
wobei die beiden Nadeln (122; 126) aus einem Material bestehen, das ausgewählt ist aus der Gruppe bestehend aus: Aluminium und Keramik.

13. Elektrizitätsgenerator nach Anspruch 10,
wobei der erste Magnet (104) einen Seltenerdmagneten umfasst.

14. Elektrizitätsgenerator nach Anspruch 10,
wobei der erste Magnet (104) einen Neodymmagneten oder einen Samarium-Kobalt-Magneten umfasst.

15. Elektrizitätsgenerator nach Anspruch 1,
ferner umfassend:
die Spulenrahmenarmatur, die angeordnet ist, um sich innerhalb eines äußeren Rahmens (107) zu drehen;
einen Satz von Flügeln (117), die an der Spulenrahmenarmatur angebracht sind;
den ersten Magneten (104), welcher einen ersten Neodymmagneten umfasst, der innerhalb der Spulenrahmenarmatur (112) angeordnet ist;
den zweiten Magneten (102), welcher einen zweiten Neodymmagneten umfasst, der über dem äußeren Rahmen angeordnet ist;
einen positiven Draht (150), der von einem ersten Ende der Spulenrahmenarmatur mit einer ersten Nadelspitze (122) verbunden ist, die mit dem äußeren Rahmen in Eingriff steht; und
einen negativen Draht (152), der von einem zweiten Ende der Spulenrahmenarmatur mit einer zweiten Nadelspitze (126) verbunden ist, die mit dem äußeren Rahmen in Eingriff steht.

## Revendications

1. Générateur d'électricité comprenant :
un premier aimant (104) et un second aimant (102),
dans lequel le premier aimant est sensiblement fixe et disposé au centre à l'intérieur d'une armature (112) de cadre de bobine, l'armature de cadre de bobine étant configurée pour tourner et comprenant un cadre autour duquel une bobine (118) est enroulée,
dans lequel le second aimant est fixe, à l'extérieur de l'armature de cadre de bobine,
dans lequel une minuscule aiguille (105) est incorporée dans le premier aimant, l'aiguille équilibrant le premier aimant dans l'armature de cadre de bobine,
dans lequel le premier aimant est maintenu fixe en place par le champ magnétique du second aimant et par la minuscule aiguille, moyennant quoi le premier aimant est maintenu fixe lorsque l'armature de cadre de bobine tourne pendant une production d'électricité,
dans lequel le générateur d'électricité est configuré pour produire de l'électricité en réponse à la bobine traversant des lignes de flux d'un champ magnétique d'au moins le premier aimant.

2. Générateur d'électricité selon la revendication 1, dans lequel les lignes de flux sont traversées par rotation de la bobine (118).

3. Générateur d'électricité selon la revendication 2, dans lequel l'armature (112) de cadre de bobine comprend une série d'ailes (117) fixées au cadre et une rotation de la bobine se fait en réponse à un déplacement d'air frappant la série d'ailes.

4. Générateur d'électricité selon la revendication 1, dans lequel au moins l'un des aimants (102 ; 104) est un aimant en terres rares.

5. Générateur d'électricité selon la revendication 1, comprenant en outre un dispositif de support sur lequel le second aimant (102) des deux aimants est situé.

6. Générateur d'électricité selon la revendication 1, l'armature (112) comprenant en outre une première plaque métallique (128) au niveau d'une partie supérieure de l'armature de cadre de bobine et une seconde plaque métallique (130) au niveau d'une partie inférieure de l'armature (112) de cadre de bobine.

7. Générateur d'électricité selon la revendication 1, comprenant en outre une première aiguille (122) reliant une première extrémité de la bobine à une plaque métallique (128) et une seconde aiguille (126) fixant une seconde extrémité de la bobine à une seconde plaque métallique (130).

8. Générateur d'électricité selon la revendication 1, comprenant en outre un compteur (136).

9. Générateur d'électricité selon la revendication 8, comprenant en outre un fil positif (150) fixant une première plaque métallique (128) au compteur et un fil négatif (152) fixant une seconde plaque métallique (130) au compteur (136).

10. Générateur d'électricité selon la revendication 1, comprenant en outre :
un ensemble aube de turbine ;
dans lequel l'armature (112) de cadre de bobine est supportée en rotation par deux aiguilles (122 ; 126) et couplée mécaniquement à l'ensemble aube de turbine ; et
le premier aimant (104) disposé à proximité de l'armature de cadre de bobine ;
dans lequel, en réponse aux lignes de flux d'un champ magnétique du premier aimant (104) qui sont coupées par la bobine (118), de l'électricité est produite.

11. Générateur d'électricité selon la revendication 10, dans lequel les deux aiguilles (122 ; 126) ne sont pas magnétiques.

12. Générateur d'électricité selon la revendication 11, dans lequel les deux aiguilles (122 ; 126) sont composées d'un matériau sélectionné dans le groupe constitué par : le plastique, l'aluminium et la céramique.

13. Générateur d'électricité selon la revendication 10, dans lequel le premier aimant (104) comprend un aimant en terres rares.

14. Générateur d'électricité selon la revendication 10, dans lequel le premier aimant (104) comprend un aimant au néodyme ou un aimant au samarium cobalt.

15. Générateur d'électricité selon la revendication 1, comprenant en outre :
l'armature de cadre de bobine disposée de sorte à tourner dans un cadre externe (107) ;
une série d'ailes (117) fixées à l'armature de cadre de bobine ;
le premier aimant (104) comprenant un premier aimant au néodyme disposé à l'intérieur de l'armature (112) de cadre de bobine ;
le second aimant (102) comprenant un second aimant au néodyme disposé au-dessus du cadre externe ;
un fil positif (150) raccordé depuis une première extrémité de l'armature de cadre de bobine à une première minuscule aiguille (122) mise en prise avec le cadre externe ; et
un fil négatif (152) raccordé depuis une seconde extrémité de l'armature de cadre de bobine à une seconde minuscule aiguille (126) mise en prise avec le cadre externe.
